# FASCICULE DE BREVET EUROPEEN

(11) **EP 3 418 936 B1**
(45) Date de publication et mention de la délivrance du brevet: **03.09.2025**
(21) Numéro de dépôt: 18178393.7
(22) Date de dépôt: 19.06.2018
(51) Int. Cl.: G06F 21/73, G06F 21/86, H04L 9/08, H04L 9/32, H01L 23/00, H01L 21/3213

(54) **PROCÉDÉ DE SÉCURISATION D'UN CIRCUIT INTÉGRÉ LORS DE SA RÉALISATION AVEC DES PISTES DE CONNEXION ALÉATOIRES**
VERFAHREN ZUR SICHERUNG EINES INTEGRIERTEN SCHALTKREISES BEI SEINER HERSTELLUNG MIT ZUFÄLLIGER LEITERBAHNEN
METHOD FOR SECURING AN INTEGRATED CIRCUIT DURING THE PRODUCTION THEREOF USING RANDOM CONNECTING TRAKCS

(30) Priorité: 21.06.2017 FR 1755651
(43) Date de publication de la demande: 26.12.2018
(73) Titulaire: Commissariat à l'Energie Atomique et aux Energies Alternatives, 75015 Paris (FR)
(72) Inventeur: MAY, Michael, 38430 Saint Jean de Moirans (FR); LANDIS, Stefan, 38210 Tullins (FR); PEBAY-PEYROULA, Florian, 38250 St-Nizier-du-Moucherotte (FR)
(74) Mandataire: Brevalex

(56) Documents cités:
- EP-A1- 2 819 049
- US-A1- 2014 042 628
- US-A1- 2015 084 193

## Description

### DOMAINE TECHNIQUE

La présente invention concerne le domaine de sécurisation de circuits intégrés, notamment de manière constructive par des fonctions physiques non-clonables.

### ÉTAT DE LA TECHNIQUE ANTÉRIEURE

Actuellement, la contrefaçon des circuits intégrés pose un problème majeur pour les constructeurs et utilisateurs. Pour lutter contre cette contrefaçon, on cherche à trouver des moyens pour discriminer entre un circuit légitime et un circuit contrefait.

Une première solution consisterait à attribuer un identifiant unique pour chaque circuit intégré et à construire une base de données des identifiants légitimes. Cette solution n'est pas très viable car il s'avère assez simple d'émuler (ou de rejouer) un identifiant valide au moyen d'une verrue matérielle ou logicielle.

Une solution plus efficace consiste à utiliser un mécanisme de défi-réponse qui permet de réaliser une authentification en se protégeant de l'attaque par émulation (rejeu). Cette technique repose sur l'utilisation d'une fonction pour calculer la réponse à partir du défi. La fonction doit être unique pour chaque circuit intégré et non clonable. En effet, un attaquant ne doit pas être capable de recréer physiquement ou de cloner une telle fonction. Ce genre de fonctions est appelé « fonction physique non clonable » PUF (Physical Unclonable Function).

On connaît dans l'art antérieur des circuits intégrés comprenant différentes sortes de PUFs exploitant les dispersions fonctionnelles inhérentes aux circuits.

Une première technique de PUFs exploite la variabilité induite sur les temps de propagation des signaux aux limites des contraintes électroniques du circuit. Un premier exemple est un circuit intégré comprenant un PUF à arbitre consistant à insérer des signaux électriques en entrée d'un long chemin de circuits combinatoires et à détecter le signal le plus rapide. Une course est établie dans le circuit entre les différents signaux qui se propagent suivant différents chemins combinatoires et le signal qui arrive en premier est détecté par l'arbitre. Les signaux électriques en entrée définissent le challenge ou défi et le signal détecté en premier définit la réponse.

Un autre exemple est le PUF à oscillateur en anneaux décrit dans le document de Gassend et al. Intitulé « Silicon Random Functions »; proceedings of the Computer and Communications Security Conference, Nov. 2002*.* Ce PUF est composé de plusieurs boucles de délais oscillant à des fréquences spécifiques et qui commandent des compteurs. Les boucles sont disposées de façons identiques mais les dispersions technologiques inhérentes conduisent à des boucles de fréquences légèrement différentes. Ainsi, les compteurs commandés par les boucles sont utilisés pour produire les bits de réponse à un défi.

Une deuxième technique de PUFs exploite les instabilités au démarrage. Par exemple, les mémoires SRAM, déjà présentes dans une grande majorité de circuits, peuvent être utilisées comme des PUFs. Le principe de base est de récupérer l'état de la mémoire au démarrage qui est normalement unique. Sur un même principe, le PUF peut être implémenté par des circuits papillons (butterfly) réalisés à partir des matrices de deux verrouillages croisés où l'état du point mémoire au démarrage est indéterminé. Cette technique est décrite dans le document de Kumar et al. intitulé « The Butterfly PUF : Protecting IP on every FPGA »; Workshop on Cryptographie Hardware and Embedded Systems (CHES), Sep 2007, Vienna*.* Dans le même genre, on trouve également des circuits à anneaux bistables composés d'un nombre impair d'inverseurs et ayant aussi un état indéterminé au démarrage.

Une troisième technique de PUFs exploite les dispersions technologiques des résistances dans un circuit. Une telle technique est décrite dans le document de R Helinski et al. intitulé « A Physical Unclonable Function Defined Using Power Distribution System Equivalent Resistance Variations » ; DAC 2009*.* Plus particulièrement, les auteurs proposent de mesurer la chute de tension dans un circuit intégré entre des plans d'alimentation et des plans de masse due aux dispersions technologiques des résistances définies par les pistes conductrices et les interconnexions du circuit. La chute de tension est proportionnelle au courant mesuré dans des inverseurs en court-circuit agencés sur toute la surface du circuit.

Toutefois, tous les PUFs décrits ci-dessus sont basés sur des fonctionnements aux limites des contraintes électroniques des circuits et sont par conséquent très sensibles aux variations environnementales. En particulier, des changements de températures, de tensions d'alimentation ou des interférences électromagnétiques peuvent affecter leur performance en diminuant leur robustesse et en augmentant leur volatilité (i.e. leur variabilité intra-circuit). Ainsi, pour un défi constant, le PUF peut retourner des résultats différents selon les conditions environnementales impliquant le fait qu'un circuit légitime peut éventuellement être déclaré comme étant contrefait.

Un autre problème concerne le vieillissement du circuit intégré. En effet, à cause d'un fonctionnement aux limites des contraintes électroniques, le moindre petit défaut qui peut survenir lors du vieillissement du circuit fait que le PUF ne répond plus de la même manière et par conséquent, on ne peut plus identifier le circuit intégré.

Pour pallier à ces défauts, il est souvent nécessaire d'adjoindre au PUF un circuit de post-traitement de la réponse reçue qui est coûteux en termes d'empreinte et de consommation.

L'objet de la présente invention est de proposer un procédé de sécurisation d'un circuit intégré remédiant aux inconvénients précités, en particulier en réalisant un PUF quasiment insensible aux variations de conditions environnementales sans l'adjonction d'un circuit de post-traitement coûteux et sans l'introduction de modifications notables dans le procédé de fabrication du circuit.

### EXPOSÉ DE L'INVENTION

Cet objectif est atteint avec un procédé de sécurisation d'un circuit intégré lors de sa réalisation sur une plaque, ledit procédé comportant les étapes suivantes :
- délimitation de ladite plaque du circuit intégré en une première zone dite zone standard et en une deuxième zone dite zone de sécurité, et
- création dans ladite zone de sécurité d'un réseau de pistes de connexion aléatoire par une introduction contrôlée d'un matériau à séparation de phase, ledit réseau de pistes de connexion aléatoire étant configuré pour interconnecter un ensemble de nœuds conducteurs formant ainsi une fonction physique non-clonable modélisée par une continuité électrique aléatoire interrogeable via ledit ensemble de nœuds conducteurs par un protocole d'authentification défi-réponse, les nœuds conducteurs étant des nœuds quasi-ponctuels. Ces nœuds quasi-ponctuels forment des intermédiaires entre des pistes conductrices de base et le réseau de pistes de connexion aléatoire.

Ceci permet d'identifier et de sécuriser le circuit intégré de manière robuste et insensible aux variations de conditions environnementales. Contrairement à l'art antérieur, ce procédé n'exploite pas des moyens non maitrisés dans le fonctionnement électrique du circuit mais dans le procédé de fabrication lui-même. En outre, les nœuds conducteurs ponctuels limitent les courts circuits entre les pistes conductrices de base et les pistes de connexion aléatoire permettant une exploitation optimale de l'aléa fabriqué par le matériau à séparation de phase.

Ledit réseau de pistes de connexion aléatoire est créé à la fabrication du circuit par un transfert d'un motif de liens réalisé aléatoirement par une séparation de phase entre au moins deux composants d'un copolymère à bloc. Avantageusement, les masques pour réaliser les circuits sont identiques, la variabilité sur le réseau de pistes aléatoires étant insérée lors de la fabrication.

Ainsi, le procédé exploite des moyens non maitrisés et aléatoires dans la réalisation matérielle de la structure d'interconnexion.

Avantageusement, un premier sous-ensemble de nœuds conducteurs est configuré pour recevoir un défi, tandis qu'un deuxième sous-ensemble complémentaire de nœuds conducteurs est configuré pour fournir la réponse audit défi.

Ceci permet de réaliser une authentification très sécurisée et protégée contre des attaques par rejeu.

Selon un premier mode de réalisation, lesdits premier et deuxième sous-ensembles de nœuds conducteurs sont formés sur un même niveau de contact.

Selon un deuxième mode de réalisation, ledit premier sous-ensemble de nœuds conducteurs est formé sur un premier niveau de contact tandis que ledit deuxième sous-ensemble de nœuds conducteurs est formé sur un deuxième niveau de contact.

Selon un premier mode de réalisation préféré de la présente invention, la sécurisation du circuit intégré s'intègre au niveau de la mise en œuvre d'un back-end dudit circuit intégré et comporte les étapes suivantes :
- réalisation d'un premier niveau de contact sur la surface desdites zones standard et de sécurité de ladite plaque du circuit intégré,
- dépôt sur la surface dudit premier niveau de contact d'une première multicouche comprenant une barrière à une diffusion métallique ainsi qu'un masque de gravure,
- dépôt sur ladite première multicouche d'au moins une deuxième couche comportant ledit copolymère à bloc,
- recuit thermique de la plaque engendrant une auto-organisation laminaire dudit copolymère à bloc,
- insolation de ladite zone de sécurité rendant soluble l'un des deux composants dudit copolymère à bloc,
- application d'une solution adaptée pour retirer ledit composant soluble dudit copolymère par dissolution laissant en place dans ladite zone de sécurité uniquement le motif de liens formé par une seule phase dudit copolymère à bloc,
- transfert dudit motif de liens de ladite zone de sécurité dans le masque de gravure formant ainsi des gravures de liens correspondants,
- nettoyage de la surface des zones standard et de sécurité,
- reprise du cours de fabrication habituel pour créer des gravures du circuit prévu dans la zone standard , et
- remplissage des gravures dans les zones standard et de sécurité par un métal conducteur.

Ainsi, la partie aléatoire est dans le procédé de fabrication et non pas dans des masques ou gravures différentes. En outre, l'ensemble des étapes successives sont régulées et contrôlées afin d'assurer une variabilité extrêmement faible des paramètres clés de fonctionnalité des circuits intégrés. De plus, du fait que la réalisation du réseau de pistes de connexion aléatoire est non maitrisée, le coût de clonage devient excessivement élevé et la rétro-ingénierie, autant par imagerie que par apprentissage, est extrêmement difficile.

Avantageusement, le procédé comporte en outre la réalisation d'un deuxième niveau de contact sur la surface des zones standard et de sécurité.

Ceci permet d'augmenter le nombre des entrées et sorties logiques de défi-réponse sécurisant encore davantage le protocole d'authentification.

Selon un mode de réalisation particulier de la présente invention, ledit copolymère à bloc est constitué d'un premier homopolymère de type polystyrène « PS » et d'un deuxième homopolymère de type poly-méthacrylate de méthyle « PMMA ».

Ainsi, les deux homopolymères présentent des propriétés physico-chimiques différentes permettant de les séparer de manière contrôlée.

Avantageusement, ladite au moins une deuxième couche comporte une première couche intermédiaire de masque de gravure de type « tournette sur carbone » SOC et une deuxième couche intermédiaire de « revêtement de silicone anti réfléchissante » SiARC.

Ceci permet d'augmenter la capacité de transfert pour réaliser de très petits motifs de l'ordre de quelques dizaines de nanomètres.

Le procédé comporte une application d'une tension supérieure à la tension de lecture pour claquer des pistes de connexion fragiles.

Ceci permet de supprimer les contacts fragiles et ainsi de quasiment supprimer toute variation par vieillissement.

Selon un autre mode de réalisation de la présente invention, la sécurisation du circuit intégré est réalisée au niveau du front-end.

L'invention concerne également un circuit intégré sécurisé pouvant être obtenu à l'aide d'un procédé selon l'invention. Le document EP 2 819 049 A1 (NXP BV [NL]) 31 décembre 2014 (2014-12-31) divulgue l'utilisation de particule diélectrique ou conductrice répartie de manière aléatoire au-dessus d'un CI. Des trous d'interconnexion sont utilisés à travers un multiplexeur pour effectuer plusieurs mesures de capacité pour obtenir une matrice de mesures capacitives en tant que signature du shield aléatoire (PUF). La capacité est mesurée par le temps de charge. Le blindage peut couvrir seulement une partie pour protéger le CI (par exemple la SRAM). Le document US 2014/042628 A1 (EDELSTEIN DANIEL C [US] ET AL) 13 février 2014 (2014-02-13) divulgue un procédé de création de PUF, dans une partie d'un circuit intégré, utilisant un copolymère à bloc (par exemple un polystyrene-block-polymethylmethacrylate: PS-b-PMMA) pour créer des structures aléatoires de dimension de l'ordre de 10-50 nm en utilisant un transfert lithographique de structures obtenues grâce au changement de phase du copolymère (après recuit thermique). Le document US 2015/084193 A1 (FENG KAI D [US] ET AL) 26 mars 2015 (2015-03-26) divulgue des défauts de fabrication aléatoires créant des connexions électriques Des éléments conducteurs adjacents forment des lignes conductrices sur des régions d'isolation. Des diélectriques polymères organiques appliqués par centrifugation peuvent être utilisés. Les tranchées créées de manière aléatoire sont remplies d'un matériau conducteur.

### BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :
La Fig. 1 illustre de manière très schématique un procédé de sécurisation d'un circuit intégré, selon un mode de réalisation de l'invention ;
La Fig. 2 illustre de manière très schématique une vue en coupe d'un circuit intégré sécurisé réalisé par le procédé de sécurisation selon un mode de réalisation de l'invention ;
Les Figs. 3A-3K illustrent de manière très schématique des étapes d'un procédé de sécurisation d'un circuit intégré, selon un mode de réalisation préféré de l'invention ;
La Fig. 4A illustre un exemple d'une couche non homogène d'un copolymère à bloc de type PS-PMMA, selon l'invention ; et
La Fig. 4B illustre des liens formés par une seule phase du copolymère à bloc, selon l'invention.

### EXPOSÉ DÉTAILLÉ DE MODES DE RÉALISATION PARTICULIERS

Le concept à la base de l'invention est la création volontaire et aléatoire d'un réseau de liens de connexion métallique lors de la réalisation du circuit intégré par l'introduction contrôlée d'un matériau à séparation de phase.

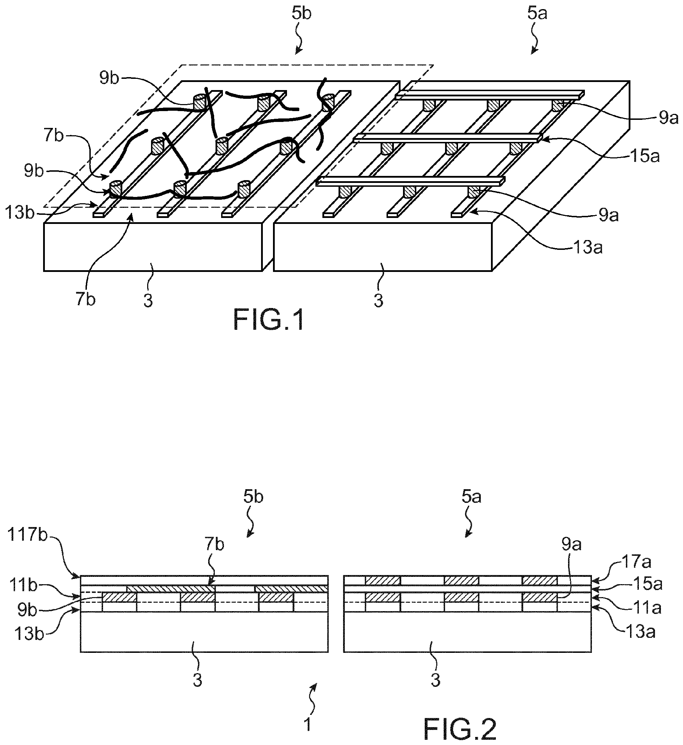

La Fig. 1 illustre de manière très schématique un procédé de sécurisation d'un circuit intégré, selon un mode de réalisation de l'invention.

Le procédé de sécurisation selon l'invention s'intègre parfaitement dans le procédé de fabrication en tant que tel du circuit intégré 1 sur une plaque de silicium 3. Dans le procédé de fabrication, les dessins sur la plaque de silicium 3 sont créés selon une méthode de photo-répétition rendant chaque circuit intégré identique aux autres. L'ensemble des étapes successives sont régulées et contrôlées afin d'assurer une variabilité extrêmement faible des paramètres fonctionnels des circuits intégrés. Toutefois, la méthode de fabrication comporte des étapes d'implémentations physiques intrinsèquement aléatoires introduisant des caractéristiques discernables qui assurent l'unicité de chaque circuit intégré 1 sans modifier leurs paramètres fonctionnels initiaux.

En effet, lors de la réalisation habituelle du circuit intégré 1 (ou puce électronique), le procédé de sécurisation comporte la délimitation du circuit intégré 1 en une première zone surfacique dite zone standard 5a et en une deuxième zone surfacique dite zone de sécurité 5b. La zone standard 5a correspond à la partie fonctionnelle du circuit intégré 1. En effet, elle est occupée par les composants électroniques de base adaptés pour réaliser les fonctions particulières du circuit. En revanche, la zone de sécurité 5b est occupée par une fonction physique non-clonable PUF destinée à sécuriser le circuit de base.

Plus particulièrement, lors de la fabrication du circuit intégré, le procédé de sécurisation comporte la création dans la zone de sécurité 5b d'un réseau de pistes de connexion aléatoire 7b par une introduction contrôlée d'un matériau à séparation de phase. Le réseau de pistes de connexion aléatoire 7b est configuré pour interconnecter de manière aléatoire un ensemble de nœuds conducteurs 9b. On notera que ces nœuds conducteurs 9b sont comme leurs nœuds conducteurs équivalents de la zone standard 5a placés de façon déterminée et non aléatoire. Par ailleurs, le réseau de pistes de connexion aléatoire 7b est dans un plan (en pointillé) qui se trouve au même niveau que le plan des pistes conductrices 15a de la zone standard 5a. Dans la zone standard 5a, les nœuds conducteurs 9a interconnectent deux niveaux standards de pistes conductrices 13a, 15a tandis que dans la zone de sécurité 5b les nœuds conducteurs 9b connectent un niveau de pistes conductrices de base 13b aux liens du réseau de pistes de connexion aléatoire 7b.

Le réseau de pistes de connexion aléatoire 7b de la zone de sécurité 5b est ainsi modélisé par une continuité électrique aléatoire qui peut être interrogeable via l'ensemble de nœuds conducteurs 9b par un protocole d'authentification défi-réponse.

La Fig. 1 montre que les nœuds conducteurs 9b sont des nœuds quasi-ponctuels qui forment des intermédiaires entre les pistes conductrices de base 13b et le réseau de pistes de connexion aléatoire 7b. Ces nœuds conducteurs quasi-ponctuels 9b limitent les courts circuits entre les pistes conductrices de base 13b et les pistes de connexion aléatoire 7b. Ceci permet d'avoir un grain très fin et donc une exploitation optimale de l'aléa fabriqué par le matériau à séparation de phase.

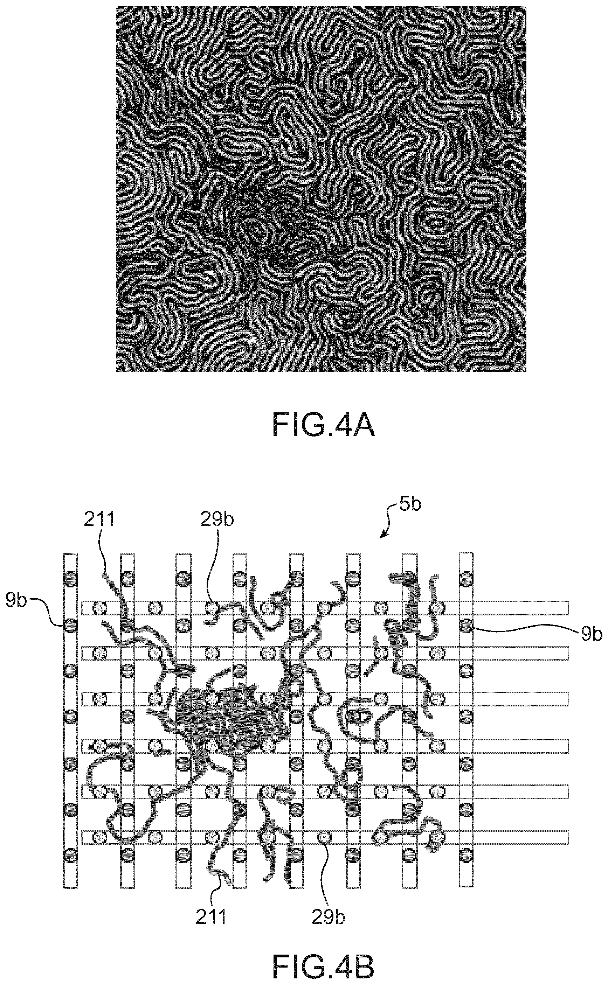

Avantageusement, le réseau de pistes de connexion aléatoire 7b de la zone de sécurité 5b est créé par un transfert d'un motif de liens réalisé aléatoirement par une séparation de phase entre au moins deux composants d'un copolymère à structure hétérogène et plus particulièrement d'un copolymère à bloc (voir Fig. 4A). Cette création du réseau de pistes de connexion aléatoire 7b est basée sur des propriétés d'auto-organisation (ou d'auto-arrangement) du copolymère à structure hétérogène.

Avantageusement, le copolymère à bloc utilisé est constitué d'un premier homopolymère de type polystyrène « PS » greffé à un deuxième homopolymère de type poly-méthacrylate de méthyle « PMMA ». Le schéma d'organisation du copolymère à bloc PS-PMMA dépend de la proportion massique ou molaire d'un bloc par rapport à l'autre. En particulier, il est connu que dans le cas où la fraction relative d'un bloc est d'environ 50% en volume, on peut obtenir un motif composé de lignes de PS entrelacées dans des lignes de PMMA. Le copolymère à bloc PS-PMMA est avantageusement utilisable en salle blanche. En effet, ce copolymère à bloc est actuellement utilisé dans l'environnement de fabrication de composants microélectroniques. Plus particulièrement, on met en œuvre des méthodes complexes pour créer des lignes parfaitement parallèles à partir des copolymères à bloc afin de fabriquer les composants microélectroniques. Une telle méthode est par exemple décrite dans le document Cheng et al, ACS Nano, Vol. 4, No. 8, 4815-4823, 2010 IBM Almaden Research Center. Le but de l'art antérieur est ainsi de vaincre l'inconvenant résultant d'un désordre inhérent à l'auto-organisation aléatoire des copolymères à bloc afin de contrôler la fabrication des lignes droites.

En revanche, le procédé de la présente invention transforme de manière non évidente l'inconvénient de l'art antérieur en un avantage en utilisant la propriété d'auto organisation des copolymères à bloc pour créer de manière simple un réseau de pistes de connexion aléatoire permettant de modéliser un PUF.

Selon un mode de réalisation de l'invention, après la délimitation de la plaque du circuit intégré 1 en une zone standard 5a et en une zone de sécurité 5b, la surface de la plaque 3 devant être structurée avec le copolymère à bloc est préparée par le dépôt d'une couche dite neutre. Cette couche neutre est préparée en fonction de la nature des constituants du copolymère à bloc. La couche neutre présente une même affinité pour les deux composants PS et PMMA permettant d'obtenir une organisation perpendiculaire à la surface des lignes entrelacées de PS et PMMA. A titre d'exemple, la couche neutre est un copolymère statistique de PS et PMMA (i.e. qu'au lieu d'avoir un bloc de PS et un bloc de PMMA, les deux composants du copolymère statistique s'enchainent de manière aléatoire).

Le copolymère à bloc est d'abord dilué dans un solvant pour former une solution ayant une concentration de quelques pourcentages en masse avant de le déposer par centrifugation sur la couche neutre de la plaque 3. A titre d'exemple, la concentration de la solution du copolymère à bloc est entre environ 1% et 5% en masse. Un premier recuit est ensuite réalisé pendant quelques minutes à une température de 10 à 30 degrés au-dessus de la température de transition vitreuse du copolymère à bloc afin de faciliter l'évaporation du solvant résiduel dans la couche déposée.

Ensuite, un recuit d'organisation est réalisé pour effectuer la séparation de phase entre les deux blocs du copolymère. En effet, les composés du copolymère à bloc s'organisent sous l'effet d'un recuit thermique en un réseau de lignes et d'espaces de période L₀ définissant ainsi des longueurs de ligne et d'espace constantes. La valeur de la période L₀ est déterminée par la longueur des chaines moléculaires des blocs composants le copolymère. Cette période L₀ se situe typiquement entre 20nm et 100nm, ce qui permet de créer des lignes ayant une longueur entre 10nm et 50nm. Par exemple dans le cas d'un copolymère à bloc de type PS-PMMA, on peut obtenir une période L₀ de l'ordre de 40 nm pour une épaisseur de film de résine comprise entre environ 30 nm et 60 nm en réalisant un recuit à une température de l'ordre de 200°C à 240°C pendant une durée de 5 à 10 minutes.

Une étape d'insolation et de développement des motifs formés par un des deux blocs est ensuite réalisée dans la zone de sécurité 5b pour ne conserver qu'un seul bloc sur sa surface à structurer. On obtient ainsi sur cette surface de la zone de sécurité 5b un motif en résine qui peut être transféré par la suite par une gravure sèche permettant de créer le réseau de pistes de connexion aléatoire 7b.

Enfin, une étape de nettoyage (stripping, en anglais) est réalisée pour nettoyer la surface de la zone de sécurité 5b et celle de la zone standard 5a des résidus de polymère restants avant de reprendre le cours de fabrication habituel du circuit intégré 1.

La Fig. 2 illustre de manière très schématique une vue en coupe d'un circuit intégré sécurisé réalisé par le procédé de sécurisation selon un mode de réalisation de l'invention.

Le circuit intégré sécurisé (ou puce électronique sécurisée) comporte ainsi une zone standard 5a et une zone de sécurité 5b. La zone standard 5a comporte de manière habituelle au moins un niveau de contact 11a comprenant des nœuds conducteurs 9a interconnectant aux moins deux niveaux standards de pistes conductrices 13a, 15a aux différents composants électroniques (non représentés) du circuit intégré 1 (voir aussi Fig. 1). Plus particulièrement, l'exemple de la Fig. 2 montre un premier niveau de contact 11a (ou niveau inférieur de contact) et un deuxième niveau de contact 17a (ou niveau supérieur de contact) dans la zone standard 5a.

La zone de sécurité 5b comporte un réseau de pistes de connexion aléatoire 7b couplé à au moins un niveau de contact 11b comprenant un ensemble de nœuds conducteurs 9b adapté pour tester la continuité électrique de ce réseau de pistes de connexion aléatoire 7b. L'exemple de la Fig. 2 montre que la zone de sécurité 5b comporte un niveau de pistes conductrices de base 13b ainsi qu'un seul niveau de contact 11b comprenant des nœuds conducteurs 9b connectant les liens du réseau de pistes de connexion aléatoire 7b. Selon cet exemple, le niveau supérieur 117b est une couche pleine (par exemple SiN) ne comprenant aucun nœud conducteur. On notera que la zone de sécurité 5b peut avantageusement comporter une pluralité de réseau de pistes de connexion aléatoire et une pluralité de niveaux de contact correspondants permettant ainsi d'augmenter la complexité du PUF.

Le ou les réseau(x) de pistes de connexion aléatoire 7b modélise(nt) une continuité électrique entre les différents nœuds conducteurs 9b via lesquels un protocole d'authentification défi-réponse peut être appliqué. Plus particulièrement, un premier sous-ensemble de nœuds conducteurs est configuré pour recevoir un stimulus définissant un défi, tandis qu'un deuxième sous-ensemble complémentaire de nœuds conducteurs est configuré pour fournir un signal de sortie correspondant à la réponse audit défi. La réponse est ainsi dépendante de la continuité électrique du réseau de pistes de connexion aléatoire 7b propre à la puce électronique 1 ainsi qu'au défi utilisé. Les nœuds conducteurs 9b recevant le stimulus définissent une entrée de sécurité du circuit intégré 1 (plus précisément, du réseau de pistes de connexion aléatoire 7b et par conséquent, du PUF) tandis que ceux fournissant la réponse forment la sortie de sécurité du circuit intégré.

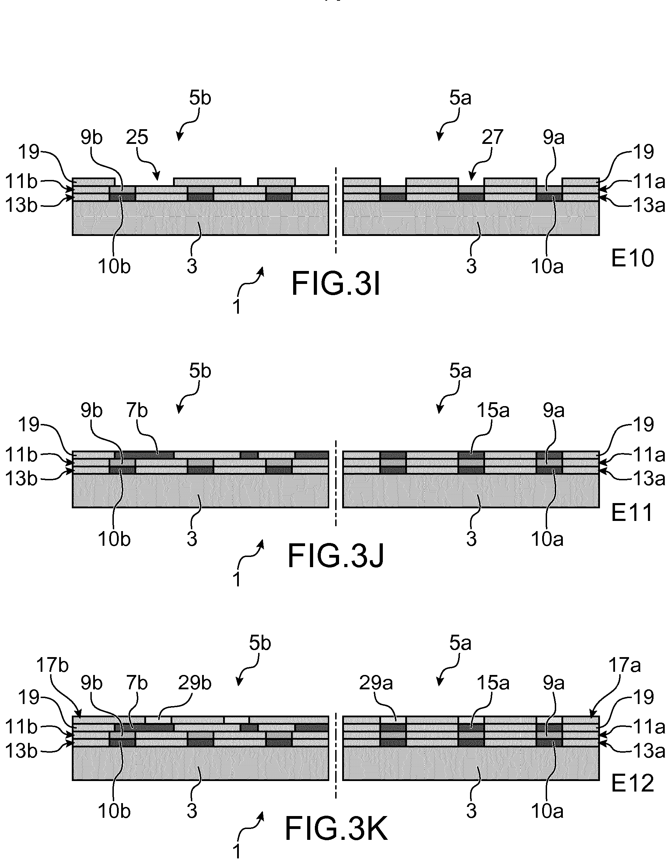

On notera que dans le cas où il n'y a qu'un seul niveau de contact, les premier et deuxième sous-ensembles de nœuds conducteurs 9b sont bien entendu formés sur le même niveau de contact 11b. En revanche, lorsqu'il y a deux niveaux de contact 11b, 17b (voir Fig. 3K), le premier sous-ensemble de nœuds conducteurs peut être formé sur un premier niveau de contact (ou niveau inférieur de contact) 11b tandis que le deuxième sous-ensemble de nœuds conducteurs peut être formé sur un deuxième niveau de contact (ou niveau supérieur de contact) 17b ou vice-versa. En variante, les premier et deuxième sous-ensembles de nœuds conducteurs peuvent être invariablement formés de manière complémentaire sur les premier et deuxième niveaux de contact. Dans tous les cas, les nœuds conducteurs 9b sélectionnés pour former l'entrée ou la sortie du PUF sont prédéterminés selon les spécifications du protocole d'authentification.

Chaque circuit intégré 1 issu du procédé de sécurisation dispose ainsi dans sa zone de sécurité 5b d'un réseau de pistes de connexion 7b unique dont le processus de fabrication est aléatoire et non maitrisé et par conséquent, excessivement difficile à cloner.

Après la réalisation des circuits intégrés sécurisés, on procède à une phase « d'enrôlement » (enrollment, en anglais) qui consiste à construire une base de données contenant des couples légitimes de « défi-réponse » pour chaque circuit intégré 1. Concrètement, pour chaque circuit intégré 1, un testeur génère aléatoirement un certain nombre N de défis ou challenges C et les adresse au circuit intégré 1. Chaque défi C est constitué d'un stimulus qui est appliqué à l'entrée de sécurité du circuit intégré 1 et la réponse R à chaque défi C est récupérée à la sortie de sécurité du circuit intégré 1. En effet, le PUF qui définit une fonction secrète F (concrétisée par le réseau de pistes de connexion aléatoire7b) calcule la réponse R à chaque défi C (i.e. R=F(C)). Le testeur récupère les N réponses R associées aux N défis C et stocke les N couples de défi-réponse (C, R) correspondants dans une base de données (non représentée).

Ainsi, l'authentification d'un circuit intégré 1 sécurisé peut être testée tout au long de son cycle de vie. Plus particulièrement, un utilisateur d'un circuit intégré 1 peut demander au fabricant (ou à l'entité qui possède la base de données des couples de défi-réponse) un défi (ou un couple défi-réponse). Le défi C est appliqué au circuit intégré 1 et ce dernier calcule la réponse au défi C. Ensuite, l'utilisateur (ou le fabriquant) compare la réponse générée par le circuit intégré 1 avec celle stockée dans la base de données afin de vérifier la légitimité du circuit intégré 1. On notera que pour plus de sécurité, le couple défi-réponse déjà utilisé est ensuite supprimé de la base de données pour éviter tout rejeu.

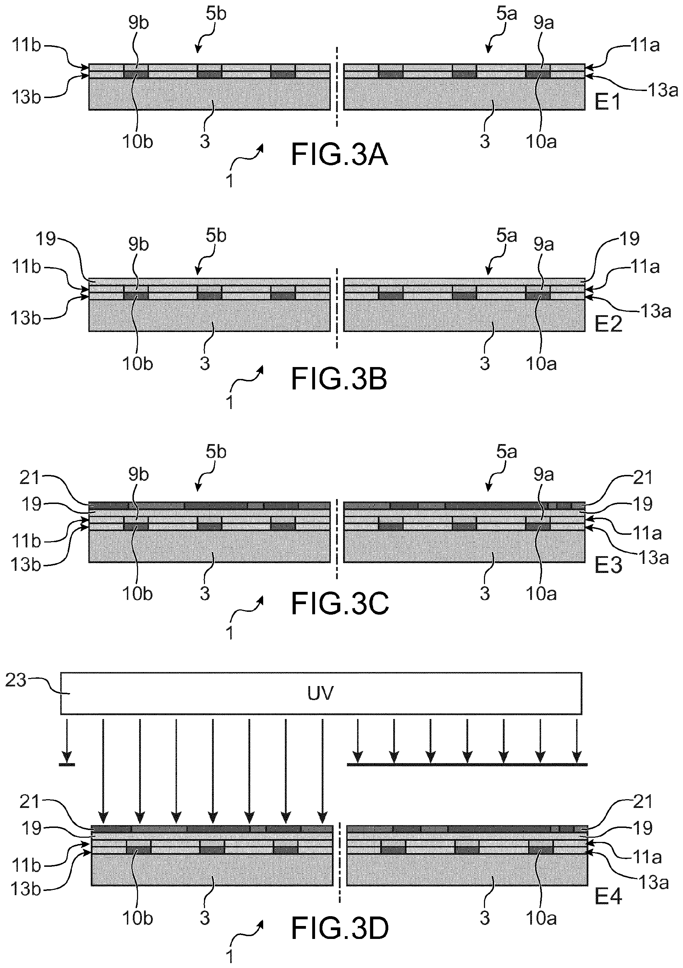

Les Figs. 3A-3K illustrent de manière très schématique des étapes d'un procédé de sécurisation d'un circuit intégré, selon un mode de réalisation préféré de l'invention.

De manière connue par l'homme du métier, on considère que la fabrication du circuit intégré 1 sur la zone standard 5a a été préalablement réalisée selon les étapes habituelles de préparation d'une couche d'oxyde sur un substrat, de transfert du dessin du circuit à reproduire à l'aide d'un masque, de gravure, de dopage, de réalisation de couches suivantes, etc.

Ainsi, on commence avec une plaque 3 délimitée en une zone de sécurité 5b et une zone standard 5a dont tout le procédé de fabrication dite « front-end » a été réalisé, c'est-à-dire que quasiment l'intégralité du circuit qu'on cherche à sécuriser a été fabriquée.

Selon ce mode de réalisation, la sécurisation du circuit intégré 1 commence alors à la fin du front-end et s'intègre dans la suite des étapes de fabrication de composés semiconducteur au niveau du « back-end », c'est-à-dire, lors de la réalisation des premières interconnexions électriques pour adéquatement interconnecter les composants entre eux ainsi qu'avec des électrodes d'entrées-sorties.

La Fig. 3A illustre de manière très schématique une première étape du procédé de sécurisation.

La première étape E1 (Fig. 3A) consiste à la réalisation d'un premier niveau de contact 11a, 11b sur la surface des zones standard 5a et de sécurité 5b de la plaque 3 du circuit intégré 1. Ce premier niveau de contact comporte des trous d'interconnexion remplis par un conducteur en cuivre, en aluminium ou en un autre métal ou matériau conducteur d'électricité formant ainsi un ensemble de nœuds conducteurs 9a, 9b. Les nœuds conducteurs sont en contact avec une ligne inférieure de pistes conductrices 10a, 10b (en cuivre, en aluminium ou autre), déjà réalisée. On notera que cette étape peut être considérée comme une étape initiale réalisée au niveau du « back-end » du procédé de fabrication du circuit intégré.

La deuxième étape E2 (Fig. 3B) consiste à déposer une première multicouche 19 sur la surface du premier niveau de contact 11a, 11b. La première multicouche 19 comprend une barrière à une diffusion métallique ainsi qu'un masque dur de gravure. Cette première multicouche 19 est par exemple une bicouche composée d'une couche de SiN ayant la fonction de barrière et d'une couche de SiO₂ ayant la fonction de masque de gravure.

La troisième étape E3 (Fig. 3C) consiste à déposer au moins une deuxième couche 21 comportant le copolymère à bloc. A titre d'exemple, on utilise un copolymère à bloc de type PS-PMMA qui s'auto-organise en lignes de PS entrelacées dans des lignes de PMMA.

Avantageusement, ladite au moins une deuxième couche 21 est un empilement de couches pouvant être déposées par la méthode connue de « revêtement par centrifugation ou tournette » (spin coating). Ainsi, on dépose une première couche intermédiaire de masque de gravure de type « tournette sur carbone » SOC (Spin On Carbon), une deuxième couche intermédiaire de « revêtement de silicone anti réfléchissante » SiARC (Silicon Anti Reflective Coating) ainsi que la couche de copolymère à bloc en solution selon par exemple une concentration entre environ 1% et 5% en masse.

Les épaisseurs de ces trois couches peuvent varier selon la nature des produits employés ainsi que les dimensions des lignes et pistes conductrices. Elles sont typiquement de l'ordre de 150nm pour le SOC, de l'ordre de 30nm pour le SiARC et de l'ordre de 80nm pour le copolymère à structure hétérogène. On notera que les couches intermédiaires de masque de gravure et de revêtement permettent de réaliser de très petits motifs de l'ordre de quelques dizaines de nanomètres.

La quatrième étape E4 consiste à procéder à un recuit thermique de la plaque 3 engendrant une auto-organisation laminaire du copolymère à structure hétérogène en un réseau de lignes et d'espaces de période prédéterminée par la longueur des chaines moléculaires constituants les blocs. L'apport d'énergie par le recuit thermique permet de séparer les deux phases. Un exemple d'une couche non homogène du copolymère à bloc PS-PMMA est illustré sur la Fig. 4A. Cet exemple illustre en particulier l'auto-organisation laminaire du copolymère à bloc PS-PMMA en deux phases représentées par des chaines claires et foncées qui se repoussent.

On notera par ailleurs que la séparation entre les deux phases peut être réalisée chimiquement à l'aide d'un solvant au lieu du recuit thermique.

La cinquième étape E5 (Fig. 3D) consiste à insoler à l'aide d'un outil de lithographie 23 classique uniquement la zone de sécurité 5b afin de rendre soluble l'un des deux composants du copolymère à bloc. En effet, pour un copolymère à bloc de type PS-PMMA, l'insolation modifie chimiquement les blocs PMMA générant une scission de chaines PMMA et les rendant solubles dans un solvant approprié comme par exemple de l'acide acétique ou de l'isopropanol.

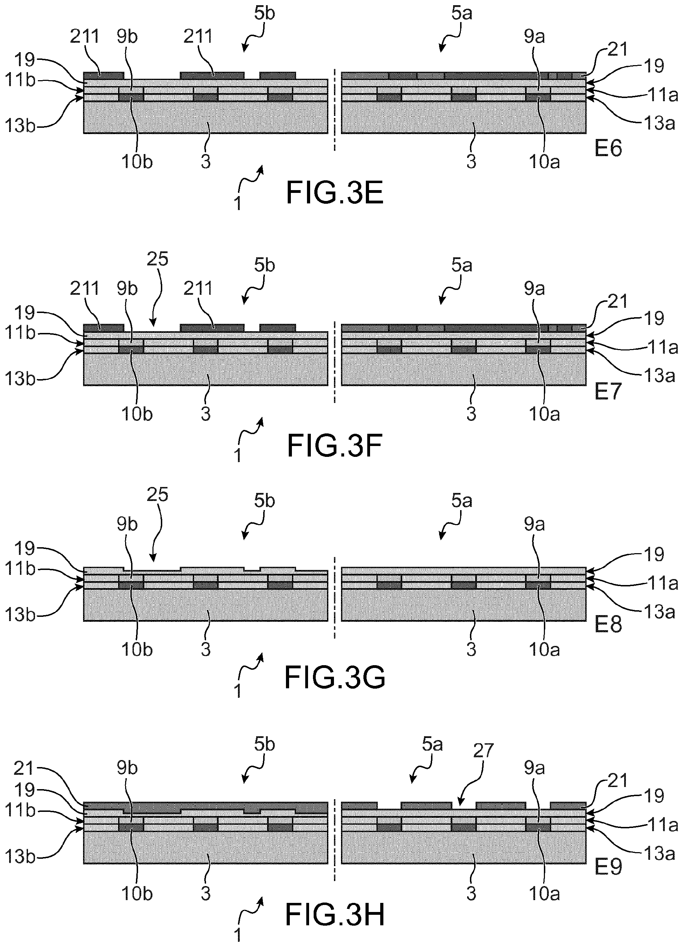

La sixième étape E6 (Fig. 3E) consiste à appliquer une solution adaptée pour retirer le composant soluble du copolymère par dissolution laissant en place dans la zone de sécurité 5b uniquement le motif de liens 211 formé par une seule phase du copolymère. Plus particulièrement, pour le copolymère à bloc PS-PMMA, le développement des motifs dans le solvant permet de ne laisser en place que les blocs PS. En effet, la Fig. 4B illustre les liens 211 formés par une seule phase du copolymère à bloc. En revanche, dans la zone standard 5a, l'intégralité de la couche 21 de copolymère à bloc PS-PMMA est conservée car aucune insolation n'a été réalisée dans cette zone.

La septième étape E7 (Fig. 3F) consiste à transférer le motif de liens 211 de la zone de sécurité 5b dans le masque de gravure formant ainsi des gravures 25 de liens correspondants. En particulier, on procède au transfert des lignes de PS dans le masque de gravure (i.e. le SiARC dans un premier temps, puis le SOC et ensuite le SiO₂). On notera que l'opération de gravure est réalisée sélectivement dans la zone de sécurité 5b en laissant la zone standard 5a protégée.

La huitième étape E8 (Fig. 3G) consiste à nettoyer la surface de la zone standard 5a et de la zone de sécurité 5b en retirant à la fois la résine résiduelle et les masques de gravure SOC/SiARC.

A la neuvième étape E9 (Fig. 3H), le cours de fabrication habituel est repris pour créer des gravures du circuit initialement prévu dans la zone standard 5a. En particulier, on réalise une lithographie d'un niveau de lignes 27 pour la zone standard 5a, suivie de la gravure de transfert dans le masque dur et le nettoyage de la résine.

La dixième étape E10 (Fig. 3I) consiste à transférer les gravures de liens 25 de la zone de sécurité 5b ainsi que les lignes 27 de la zone standard 5a dans le masque de gravure, suivi par la gravure de la barrière de cuivre SiN.

La onzième étape E11 (Fig. 3J) consiste à remplir les gravures de liens 25 de la zone de sécurité 5b ainsi que les gravures de lignes 27 de la zone standard 5a par un métal conducteur (par exemple, cuivre ou aluminium). Ainsi, le réseau de pistes de connexion aléatoire 7b et formé dans la zone de sécurité 5b d'une part, et un niveau standard de pistes conductrices 15a est formé dans la zone de standard 5a d'autre part. Le remplissage peut être réalisé de manière sélective afin de ne pas remplir les plus petites gravures de liens dans la zone de sécurité 5b.

Selon un autre mode de réalisation, le procédé peut comporter la réalisation d'un deuxième niveau de contact sur la surface des zones standard 5a et de sécurité 5b. On notera que le deuxième niveau de contact peut être uniquement réalisé que sur la zone standard 5a.

Dans ce cas, une étape supplémentaire E12 est ajoutée comme illustré sur la Fig. 3K. En effet, à l'étape E12 (Fig. 3K), on réalise un niveau de contact supérieur 17a, 17b comprenant des nœuds d'interconnexion supérieurs 29a, 29b dans la zone standard 5a ainsi que dans la zone de sécurité 5b. Le circuit intégré comporte alors des premier et deuxième niveaux (ou niveaux inférieur et supérieur) de contact comportant des nœuds d'interconnexion inférieurs 10a, 10b et supérieurs 29a, 29b.

Avantageusement, les nœuds d'interconnexion supérieurs 29b de la zone de sécurité 5b sont décalés, par exemple d'une demi-période par rapport aux nœuds d'interconnexion inférieurs 10b (i.e. du premier niveau de contact). Ce décalage spatial permet aux nœuds d'interconnexion supérieurs 29b de ne pas être au même potentiel électrique que les nœuds d'interconnexion inférieurs 10b.

Les nœuds d'interconnexion dans la zone de sécurité 5b ayant une dimension très inférieures à celles dans la zone standard 5a sont supprimés par un traitement électrique afin d'éviter toute variation par vieillissement et d'augmenter la fiabilité du PUF. On applique une tension supérieure à la tension de lecture pour claquer les interconnexions partielles très fines ayant une résistance trop élevée. En outre, pour tester l'authenticité d'un circuit intégré 1, on peut lui appliquer un signal de défi présentant une intensité de courant très faible qui préserve l'identité du circuit tout au long de son cycle de vie.

Les procédés selon les différents modes de réalisation de l'invention montrent que l'ensemble des étapes successives sont régulées et contrôlées afin d'assurer une variabilité extrêmement faible des paramètres clés de fonctionnalité du circuit dans la zone standard 5a tout en permettant par construction une réalisation non maitrisée du réseau de pistes de connexion aléatoire 7b dans la zone de sécurité 5b. Ceci renforce l'unicité de chaque puce électronique 1 permettant son identification de manière très précise tout en rendant le clonage extrêmement difficile.

On notera que le mode de réalisation du procédé de sécurisation selon les Figs. 3A-3K est transposable au « Front End », c'est-à-dire, lors de la fabrication des circuits logiques.

## Revendications

1. Procédé de sécurisation d'un circuit intégré lors de sa réalisation sur une plaque, ledit procédé comportant les étapes suivantes :
- délimitation de ladite plaque du circuit intégré (1) en une première zone surfacique dite zone standard (5a) et en une deuxième zone surfacique dite zone de sécurité (5b),
- création dans ladite zone de sécurité (5b) d'un réseau de pistes de connexion aléatoire (7b) par une introduction contrôlée d'un matériau à séparation de phase, ledit réseau de pistes de connexion aléatoire (7b) étant créé par un transfert d'un motif de liens réalisé aléatoirement par une séparation de phase entre au moins deux composants d'un copolymère à bloc, ledit réseau de pistes de connexion aléatoire (7b) étant configuré pour interconnecter un ensemble de nœuds conducteurs (9b) formant ainsi une fonction physique non-clonable modélisée par une continuité électrique aléatoire interrogeable via ledit ensemble de nœuds conducteurs par un protocole d'authentification défi-réponse, les nœuds conducteurs (9b) étant des nœuds quasi-ponctuels formant des intermédiaires entre des pistes conductrices de base (13b) et le réseau de pistes de connexion aléatoire (7b), **caractérisé par** l'étape suivante:
- application d'une tension supérieure à la tension de lecture pour claquer des pistes de connexion fragiles et ainsi de quasiment supprimer toute variation par vieillissement.

2. Procédé selon la revendication 1, **caractérisé en ce qu'**un premier sous-ensemble de nœuds conducteurs est configuré pour recevoir un défi, tandis qu'un deuxième sous-ensemble complémentaire de nœuds conducteurs est configuré pour fournir la réponse audit défi.

3. Procédé selon la revendication 2, **caractérisé en ce que** lesdits premier et deuxième sous-ensembles de nœuds conducteurs (9b) sont formés sur un même niveau de contact.

4. Procédé selon la revendication 2, **caractérisé en ce que** ledit premier sous-ensemble de nœuds conducteurs (9b) est formé sur un premier niveau de contact tandis que ledit deuxième sous-ensemble de nœuds conducteurs (29b) est formé sur un deuxième niveau de contact.

5. Procédé selon l'une quelconque des revendications précédentes, **caractérisé en ce que** la sécurisation du circuit intégré s'intègre au niveau de la mise en œuvre d'un back-end dudit circuit intégré et comporte les étapes suivantes :
- réalisation d'un premier niveau de contact (10a, 10b) sur la surface desdites zones standard (5a) et de sécurité (5b) de ladite plaque du circuit intégré,
- dépôt sur la surface dudit premier niveau de contact (10a, 10b) d'une première multicouche (11a, 11b) comprenant une barrière à une diffusion métallique ainsi qu'un masque de gravure,
- dépôt sur ladite première multicouche d'au moins une deuxième couche (21) comportant ledit copolymère à bloc,
- recuit thermique de la plaque engendrant une auto-organisation laminaire dudit copolymère à bloc,
- insolation de ladite zone de sécurité (5b) rendant soluble l'un des deux composants dudit copolymère à bloc,
- application d'une solution adaptée pour retirer ledit composant soluble dudit copolymère par dissolution laissant en place dans ladite zone de sécurité (5b) uniquement le motif de liens (211) formé par une seule phase dudit copolymère à bloc,
- transfert dudit motif de liens de ladite zone de sécurité (5b) dans le masque de gravure formant ainsi des gravures de liens correspondants,
- nettoyage de la surface des zones standard (5a) et de sécurité (5b),
- reprise du cours de fabrication habituel pour créer des gravures du circuit prévu dans la zone standard (5b), et
- remplissage des gravures (25, 27) dans les zones standard (5a) et de sécurité (5b) par un métal conducteur.

6. Procédé selon la revendication 5, **caractérisé en ce qu'**il comporte en outre la réalisation d'un deuxième niveau de contact (29a, 29b) sur la surface des zones standard (5a) et de sécurité (5b).

7. Procédé selon l'une quelconque des revendications précédentes, **caractérisé en ce que** ledit copolymère à bloc est constitué d'un premier homopolymère de type polystyrène « PS » et d'un deuxième homopolymère de type poly-méthacrylate de méthyle « PMMA ».

8. Procédé selon l'une quelconque des revendications 5 à 7, **caractérisé en ce que** ladite au moins une deuxième couche comporte une première couche intermédiaire de masque de gravure de type « tournette sur carbone » SOC et une deuxième couche intermédiaire de « revêtement de silicone anti réfléchissante » SiARC.

9. Procédé selon l'une quelconque des revendications précédentes, **caractérisé en ce que** la sécurisation du circuit intégré (1) est réalisée au niveau du front-end.

10. Circuit intégré sécurisé réalisé par le procédé selon l'une quelconque des revendications précédentes.

## Patentansprüche

1. Verfahren zur Sicherung einer integrierten Schaltung bei ihrer Ausführung auf einer Platte, wobei das Verfahren die folgenden Schritte umfasst:
- Begrenzung der Platte der integrierten Schaltung (1) in einen ersten Oberflächenbereich, den Standardbereich (5a), und in einen zweiten Oberflächenbereich, den Sicherheitsbereich (5b),
- Erzeugung in dem Sicherheitsbereich (5b) eines Netztes von zufälligen Verbindungsbahnen (7b) durch kontrolliertes Einführen eines phasentrennenden Materials, wobei das Netz von zufälligen Verbindungsbahnen (7b) durch Übertragung eines Verbindungsmusters erzeugt wird, das zufällig durch eine Phasentrennung zwischen mindestens zwei Komponenten eines Blockcopolymers hergestellt wird, wobei das Netz von zufälligen Verbindungsbahnen (7b) so konfiguriert ist, dass es eine Reihe von leitenden Knoten (9b) miteinander verbindet, wodurch eine nicht klonbare physikalische Funktion gebildet wird, die durch eine zufällige elektrische Kontinuität modelliert wird, die über die Reihe der leitenden Knoten durch ein Challenge-Response-Authentifizierungsprotokoll abgefragt werden kann, wobei die leitenden Knoten (9b) Quasipunktknoten sind, die Zwischenstufen zwischen grundlegenden leitenden Bahnen (13b) und dem Netz von zufälligen Verbindungsbahnen (7b) bilden, **gekennzeichnet durch** den folgenden Schritt:
- Anwendung einer höheren Spannung als die Lesespannung, um brüchige Verbindungsbahnen zu durchschlagen und so jede Veränderung durch Alterung nahezu auszuschließen.

2. Verfahren nach Anspruch 1, **dadurch gekennzeichnet, dass** eine erste Untergruppe von leitenden Knoten so konfiguriert ist, dass sie eine Herausforderung aufnimmt, während eine zweite ergänzende Untergruppe von leitenden Knoten so konfiguriert ist, dass sie die Antwort auf diese Herausforderung liefert.

3. Verfahren nach Anspruch 2, **dadurch gekennzeichnet, dass** die ersten und zweiten Untergruppen von leitenden Knoten (9b) auf derselben Kontaktebene ausgebildet sind.

4. Verfahren nach Anspruch 2, **dadurch gekennzeichnet, dass** die erste Untergruppe von leitenden Knoten (9b) auf einer ersten Kontaktebene ausgebildet ist, während die zweite Untergruppe von leitenden Knoten (29b) auf einer zweiten Kontaktebene ausgebildet ist.

5. Verfahren nach einem der vorhergehenden Ansprüche, **dadurch gekennzeichnet, dass** die Sicherung des integrierten Schaltkreises auf der Ebene der Implementierung eines Backends des integrierten Schaltkreises integriert ist und folgende Schritte umfasst:
- Herstellung einer ersten Kontaktebene (10a, 10b) auf der Oberfläche der Standard- (5a) und Sicherheitsbereiche (5b) der Platte der integrierten Schaltung,
- Aufbringen einer ersten Mehrschicht (11a, 11b), die eine metallische Diffusionsbarriere sowie eine Ätzmaske umfasst, auf die Oberfläche der ersten Kontaktebene (10a, 10b),
- Aufbringung mindestens einer zweiten Schicht (21), die das Blockcopolymer umfasst, auf die erste Mehrschicht,
- thermische Anlassung der Platte, wobei eine laminare Selbstorganisation des Blockcopolymers entsteht,
- Bestrahlung des Sicherheitsbereichs (5b), wobei einer der beiden Bestandteile des Blockcopolymers löslich wird,
- Anwendung einer geeigneten Lösung zum Entfernen der löslichen Komponente des Copolymers durch Auflösung, wobei in dem Sicherheitsbereich (5b) nur das durch eine einzelne Phase des Blockcopolymers gebildete Verbindungsmuster (211) an Ort und Stelle bleibt,
- Übertragung des Verbindungsmusters aus dem Sicherheitsbereich (5b) in die Ätzmaske, wobei entsprechende Verbindungsätzungen gebildet werden,
- Reinigung der Oberfläche der Standard- (5a) und Sicherheitsbereiche (5b),
- Wiederaufnahme des üblichen Fertigungsverlaufs zum Erstellen von Ätzungen der vorgesehenen Schaltung im Standardbereich (5b), und
- Auffüllung der Ätzungen (25, 27) in den Standard- (5a) und Sicherheitsbereichen (5b) mit leitfähigem Metall.

6. Verfahren nach Anspruch 5, **dadurch gekennzeichnet, dass** es ferner das Ausführen einer zweiten Kontaktebene (29a, 29b) auf der Oberfläche der Standard- (5a) und Sicherheitsbereiche (5b) umfasst.

7. Verfahren nach einem der vorhergehenden Ansprüche, **dadurch gekennzeichnet, dass** das Blockcopolymer aus einem ersten Homopolymer vom Typ Polystyrol "PS" und einem zweiten Homopolymer vom Typ Polymethylmethacrylat "PMMA" besteht.

8. Verfahren nach einem der Ansprüche 5 bis 7, **dadurch gekennzeichnet, dass** die mindestens eine zweite Schicht eine erste Zwischenschicht aus einer Ätzmaske vom Typ "Kohlenstoffdrehkreuz" SOC und eine zweite Zwischenschicht aus einer "antireflektierenden Silikonbeschichtung" SIARC umfasst.

9. Verfahren nach einem der vorhergehenden Ansprüche, **dadurch gekennzeichnet, dass** die Sicherung des integrierten Schaltkreises (1) am Frontend erfolgt.

10. Sichere integrierte Schaltung, hergestellt durch das Verfahren nach einem der vorhergehenden Ansprüche.

## Claims

1. Method of securing an integrated circuit during its fabrication on a wafer, said method including the following steps:
- delimitation of said wafer of the integrated circuit (1) into a first zone called a standard zone (5a) and a second zone called a security zone (5b), and
- creation of a random connection tracks network (7b) in said security zone (5b) by the controlled introduction of a phase separation material, said random connection tracks network (7b) being created by a transfer of a pattern of links made at random by a phase separation between at least two components of a block copolymer, said random connection tracks network (7b) being configured to interconnect a set of conducting nodes (9b) thus forming a physical unclonable function modelled by random electrical continuity that can be queried through said set of conducting nodes using a challenge-response authentication protocol, the conducting nodes (9b) being quasi-point nodes forming intermediaries between the base conducting tracks (13b) and the random connection tracks network (7b), **characterised by** the following step:
- application of a voltage higher than the read voltage to break down fragile connection tracks, thereby almost eliminating any variation caused by aging.

2. Method according to claim 1, **characterised in that** a first sub-set of conducting nodes is configured to receive a challenge, while a second complementary sub-set of conducting nodes is configured to provide the response to said challenge.

3. Method according to claim 2, **characterised in that** said first and second sub-sets of conducting nodes (9b) are formed on the same contact level.

4. Method according to claim 2, **characterised in that** said first sub-set of conducting nodes (9b) is formed on a first contact level while said second sub-set of conducting nodes (29b) is formed on a second contact level.

5. Method according to any one of preceding claims, **characterised in that** the security of the integrated circuit is integrated when fabricating a back-end of said integrated circuit and comprises the following steps:
- make a first contact level (10a, 10b) on the surface of said standard zone (5a) and security zone (5b) of said integrated circuit wafer,
- deposit a first multilayer (11a, 11b) on the surface of said first contact level (10a, 10b), comprising a barrier to metallic diffusion and an etching mask,
- deposit at least one second layer (21) including said block copolymer on said first multi-layer,
- thermal annealing of the wafer leading to laminar auto-arrangement of said copolymer block,
- insolation of said security zone (5b) making one of the two components of said block copolymer soluble,
- application of an appropriate solution for removing said soluble component from said copolymer by dissolution leaving only the pattern of links (211) formed by a single phase of said block copolymer in place in said security zone (5b),
- transfer said links pattern from said security zone (5b) in the etching mask, thus forming etchings of corresponding links,
- strip the surface of the standard zone (5a) and the security zone (5b),
- continue the normal fabrication procedure to create etchings in the circuit to be formed in the standard zone (5b), and
- fill etchings (25, 27) in the standard zone (5a) and the security zone (5b) with a conducting metal.

6. Method according to claim 5, **characterised in that** it also comprises fabrication of a second contact level (29a, 29b) on the surface of the standard zone (5a) and the security zone (5b).

7. Method according to any one of preceding claims, **characterised in that** said block copolymer is composed of a first polystyrene (PS) type homopolymer and a second polymethyl methacrylate (PMMA) type homopolymer.

8. Method according to any one of claims 5 to 7, **characterised in that** said at least one second layer comprises a first intermediate etching mask layer of the "Spin On Carbon" SOC type and a second intermediate "Silicon Anti Reflective Coating" SiARC layer.

9. Method according to any one of the previous claims, **characterised in that** the integrated circuit (1) is secured at the front-end.

10. Integrated circuit made using the method according to any one of the previous claims.
